# EUROPÄISCHE PATENTSCHRIFT

(11) **EP 2 854 985 B1**
(45) Veröffentlichungstag und Bekanntmachung des Hinweises auf die Patenterteilung: **20.02.2019**
(21) Anmeldenummer: 13723670.9
(22) Anmeldetag: 15.05.2013
(51) Int. Cl.: B01D 35/12, B01D 29/11

(54) **FILTERVORRICHTUNG FÜR FLUIDE**
FILTER DEVICE FOR FLUIDS
DISPOSITIF FILTRANT POUR FLUIDES

(30) Priorität: 01.06.2012 DE 102012010895
(43) Veröffentlichungstag der Anmeldung: 08.04.2015
(73) Patentinhaber: Hydac Filtertechnik GmbH, 66280 Sulzbach/Saar (DE)
(72) Erfinder: FREIDINGER, Martin, 66130 Saarbrücken (DE)
(74) Vertreter: Bartels und Partner, Patentanwälte
(86) Internationale Anmeldenummer: PCT/EP2013/001439
(87) Internationale Veröffentlichungsnummer: WO 2013/178326

(56) Entgegenhaltungen:
- DE-A1-102011 004 367
- GB-A- 494 437
- GB-A- 2 166 060

## Beschreibung

Die Erfindung betrifft eine Filtervorrichtung für Fluide mit den Merkmalen im Oberbegriff von Anspruch 1.

Filtervorrichtungen dieser Art sind Stand der Technik. Als sog. "Doppelfilter" kommen solche Filtervorrichtungen unter anderem bei Getrieben, wie stationären Getrieben oder Schiffsgetrieben, als Ölfilter zum Einsatz. Bei derartigen Anlagen, die ohne Betriebsunterbrechungen betreibbar sein sollen, ermöglichen es diese Filtervorrichtungen, das Auswechseln eines verbrauchten Filterelements vorzunehmen, ohne die betreffende Anlage abzuschalten oder während der Wartungsmaßnahmen auf eine Filterfunktion zu verzichten.

Die GB 2 166 060 A beschreibt eine gattungsgemäße Filtervorrichtung für Fluide, mit einem Anschlusskörper mit Fluideingang für Unfiltrat und Fluidausgang für Filtrat, mit einem ersten und einem zweiten Filterelement und mit einer im Anschlusskörper befindlichen Umschalteinrichtung, mittels deren eine Fluidverbindung zwischen Fluideingang und Fluidausgang wahlweise über das erste oder über das zweite Filterelement herstellbar ist, wobei das eine der Filterelemente als Hilfsfilter ins Innere des Anschlusskörpers integriert ist, wobei die Umschalteinrichtung einen Kugelhahn aufweist.

Weitere Filtervorrichtungen gehen aus der GB 494 437 und der DE 10 2011 004 367 A1 hervor.

Ausgehend von diesem Stand der Technik stellt sich die Erfindung die Aufgabe, eine Filtervorrichtung der besagten Art zur Verfügung zu stellen, die sich durch eine einfache Bedienbarkeit sowie eine besonders kompakte Bauweise auszeichnet.

Erfindungsgemäß ist diese Aufgabe durch eine Filtervorrichtung gelöst, die die Merkmale des Patentanspruchs 1 in seiner Gesamtheit aufweist. Demgemäß zeichnet sich die erfindungsgemäße Filtervorrichtung dadurch aus, dass der Hilfsfilter und der Kugelhahn ein ihnen gemeinsames Funktionselement aufweisen, so dass der Kugelhahn und der Hilfsfilter praktisch eine Baueinheit bilden.

Es ist ferner vorgesehen, dass das eine Filterelement der Filtervorrichtung als Hilfsfilter ins Innere des Anschlusskörpers integriert ist. Während beim Stand der Technik an der Außenseite des Anschlusskörpers zwei Filterelemente vorgesehen sind, die jedes für eine der vollen Betriebsdauer des jeweiligen Filterelements entsprechende Filterleistung ausgelegt und dimensioniert sind, ist bei der erfindungsgemäßen Vorrichtung lediglich ein entsprechend groß dimensioniertes Filter, das an der Außenseite des Anschlussgehäuses abnehmbar angebracht ist, erforderlich, weil bei der Auswechslung dieses äußeren Filters die Vorrichtung über das innere Hilfsfilter weiter betreibbar ist. Da der Weiterbetrieb über das hier als erstes Filterelement bezeichnete Hilfsfilter lediglich während der kurzen Phasen der Auswechslung des hier als zweites Filterelement bezeichneten, abnehmbaren Filters erfolgt, ist als Hilfsfilter ein klein dimensioniertes, konstruktiv einfach in den Anschlusskörper integrierbares Hilfsfilter benutzbar.

Wie beim Stand der Technik kann das zweite Filterelement, als das Hauptfilter, an der Außenseite des Anschlusskörpers abnehmbar angebracht und beispielsweise in Form einer sog. Spin-on-Patrone ausgebildet sein.

Dabei kann die Anordnung mit besonderem Vorteil so getroffen sein, dass ein die Schaltkugel des Kugelhahns im Kugelhahngehäuse in Position haltender Distanzkörper als gemeinsames Funktionselement von Hilfsfilter und Kugelhahn eine Eingangsöffnung aufweist, die einen Fluidweg zwischen diesem und dem inneren Filterhohlraum des Hilfsfilters bildet.

Bei besonders vorteilhaften Ausführungsbeispielen ist das Kugelhahngehäuse über die Schaltkugel hinaus entlang einer Achse verlängert, die sich durch den Filterhohlraum des Hilfsfilters hindurch erstreckt, wobei an diesem ein senkrecht zur Hauptachse verlaufender, zum Fluidausgang führender Ausgangskanal vom Kugelhahngehäuse abzweigt. Das Hilfsfilter ist dadurch praktisch in den Ausgangskanal unmittelbar eingebaut, so dass das an der Abzweigstelle des Ausgangskanals im Kugelhahngehäuse angeordnete Hilfsfilter an der Außenseite seines den inneren Filterhohlraum umgebenden Filtermediums mit dem Ausgangskanal in unmittelbarer Fluidverbindung ist.

In besonders vorteilhafter Weise kann das Kugelhahngehäuse an der der Eingangsöffnung des Hilfsfilters entgegengesetzten Seite eine die Hauptachse umgebende Eintrittsöffnung, die mit der Schmutzseite des jeweiligen, am Anschlusskörper angebrachten Hauptfilters in Fluidverbindung ist, sowie eine Zuströmöffnung aufweisen, die auf die zur Hauptachse senkrechte Spindelachse der Schaltkugel ausgerichtet und mit dem Fluideingang in Fluidverbindung ist, wobei durch die Schaltkugel die Zuströmöffnung wahlweise mit der zum Hauptfilter führenden Eintrittsöffnung oder mit der zum Hilfsfilter führenden Eingangsöffnung verbindbar ist.

Nachstehend ist die Erfindung anhand eines in der Zeichnung dargestellten Ausführungsbeispiels im Einzelnen erläutert. Es zeigen:
- Fig. 1: eine gegenüber einer natürlichen Ausführungsform lediglich geringfügig verkleinert gezeichnete, perspektivische Schrägansicht eines Ausführungsbeispiels der erfindungsgemäßen Filtervorrichtung, wobei ein Hauptfilter weggelassen ist;
- Fig. 2: einen im Maßstab von Fig. 1 gezeichneten Längsschnitt des Ausführungsbeispiels, wobei ein Hauptfilter eingezeichnet ist; und
- Fig. 3: eine Schnittdarstellung entsprechend der Schnittlinie III-III von Fig. 2.

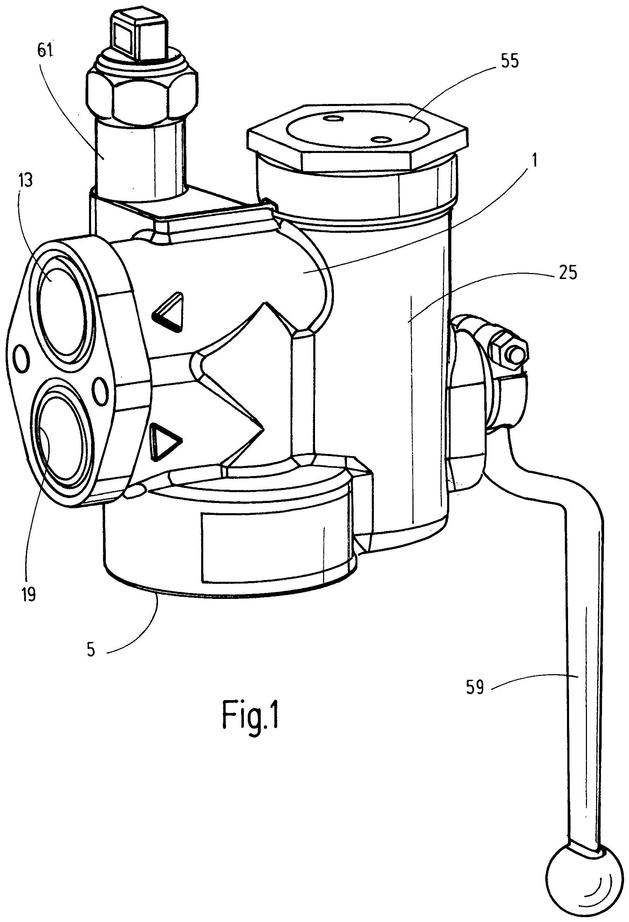

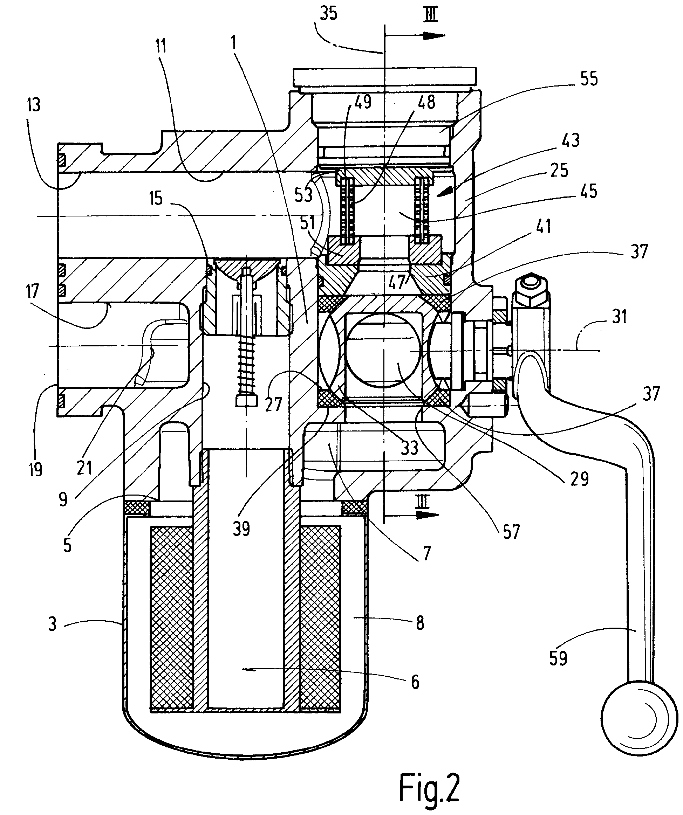

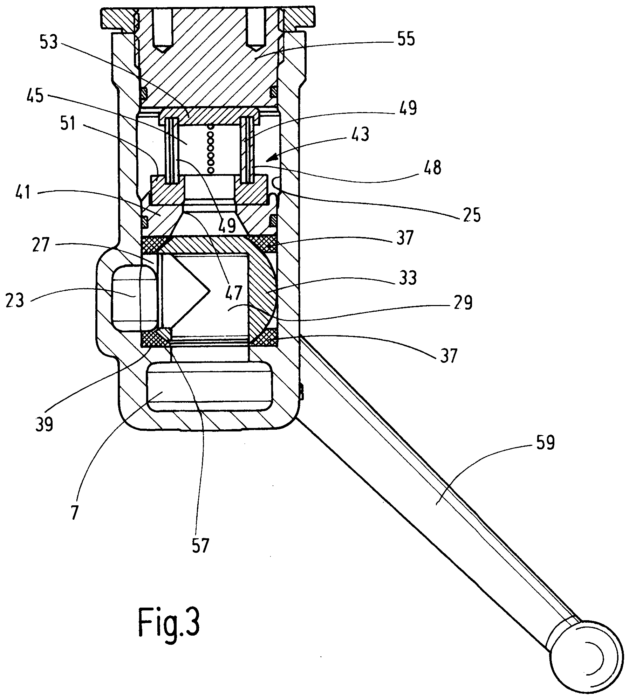

Die Fig. 1 zeigt das hier zu beschreibende Ausführungsbeispiel der erfindungsgemäßen Filtervorrichtung ohne ein am Anschlusskörper 1 angebrachtes Hauptfilter. Dieses ist in Fig. 2 mit 3 bezeichnet. Bei dem Hauptfilter 3 handelt es sich um eine sog. Spin-on-Filterpatrone, die in der bei derartigen Filterpatronen üblichen Weise an einem am Anschlusskörper 1 ausgebildeten Filterkopf 5 durch eine Verschraubung abnehmbar anbringbar ist. Am Filterkopf 5 sind eine Fluidführung 7, die einen Eingang zur Schmutzseite des Hauptfilters 3 bildet, sowie eine zentrale Fluidführung 9 vorgesehen, die den Ausgang aus der Reinseite 6 des Hauptfilters 3 bildet. Diese Fluidführung 9 ist durch einen Kanal gebildet, der im Anschlusskörper 1, bezogen auf die Darstellung von Fig. 2, in vertikaler Richtung nach oben in einen zur Vertikalen rechtwinklig verlaufenden Ausgangskanal 11 mündet, der an einem Fluidausgang 13 des Anschlusskörpers 1 endet. An der Einmündung der Fluidführung 9 in den Ausgangskanal 11 befindet sich ein federbelastetes Rückschlagventil 15, das den Strömungsweg freigibt, wenn beim Filtrationsbetrieb des Hauptfilters 3 Filtrat über die Fluidführung 9 in den Ausgangskanal 11 strömt, bei abgenommenem Hauptfilter 3 jedoch die Fluidführung 9 verschließt. Bei der zeichnerischen Darstellung entsprechend Fig. 2 befindet sich unterhalb des Ausgangskanals 11 im Anschlusskörper 1 ein parallel zu diesem verlaufender Eingangskanal 17, der, vom Fluideingang 19 des Anschlusskörpers 1 ausgehend, in eine Auswölbung 21 übergeht, die den Fluidweg, um die Wand der Fluidführung 9 herum, in einen Eingangsraum 23, siehe Fig. 3, fortsetzt. Dieser Eingangsraum 23 befindet sich an einem Kugelhahngehäuse 25 an einer Zuströmöffnung 27 eines Kugelhahns 29. Genauer gesagt, fluchtet die Zuströmöffnung 27 mit der Spindelachse 31 der drehbaren Schaltkugel 33 des Kugelhahns 29.

Das Kugelhahngehäuse 25 erstreckt sich entlang einer in Fig. 2 vertikal verlaufenden Hauptachse 35. Für ihre axiale Position entlang der Hauptachse 35 ist die Schaltkugel 33 zwischen Dichtscheiben 37 gehalten, deren in der Zeichnung untere an einem Gehäuseabsatz 39 des Kugelhahngehäuses 25 anliegt. Die obere Dichtscheibe 37 ist an einem Distanzkörper 41 gehalten, der Bestandteil eines Hilfsfilters 43 ist. Genauer gesagt, bildet der Distanzkörper 41 die Elementaufnahme für das Filterelement des Hilfsfilters 43. Dieses weist als Rohseite einen inneren Filterhohlraum 45 auf, der über eine im Distanzkörper 41 befindliche Eingangsöffnung 47, die im Distanzkörper 41 zur Hauptachse 35 konzentrisch ausgebildet ist, mit dem Kugelhahn 29 in Fluidverbindung ist. Das Hilfsfilter 43 weist ein den Filterhohlraum 45 umgebendes Filtermedium auf, das beim vorliegenden Ausführungsbeispiel zwischen zwei fluiddurchlässigen Stützrohren 48 und 49 angeordnet ist, die sich zwischen Filter-Endkörpern 51 und 53 erstrecken, von denen der in der Zeichnung untere Endkörper 51 an dem als Elementaufnahme dienenden Distanzkörper 41 anliegt. Dabei können der das Bodenteil des Filterelements bildende Endkörper 51 und der Distanzkörper 41 ein Bauteil sein. Über den oberen Endkörper 53 sowie die Stützrohre 48, 49 ist die gesamte Baugruppe aus Kugelhahn 29 und Hilfsfilter 43 mittels eines einschraubbaren Deckels 55 im Kugelhahngehäuse 25 axial positioniert.

In den Zeichnungen ist der Kugelhahn 29 in einer Schaltposition dargestellt, die dem Filtrationsbetrieb mit dem Hauptfilter 3 entspricht. Dabei sperrt, wie gezeigt, die Schaltkugel 33 die Eingangsöffnung 47 des Distanzkörpers 41 und somit den Fluideintritt zum Hilfsfilter 43 ab, so dass dieses außer Funktion ist. Andererseits stellt die Schaltkugel 33, wie am deutlichsten aus Fig.3 zu ersehen ist, die Fluidverbindung zwischen dem Eingangsraum 23, und damit dem Fluideingang 19, und einer Eintrittsöffnung 57 her, die über die Fluidführung 7 zur Schmutzseite 8 des Hauptfilters 3 führt, so dass dieses für den Filtrationsbetrieb in Funktion ist, wobei das Filtrat über die Fluidführung 9 und das Rückschlagventil 15 zum Ausgangskanal 11 gelangt und die Vorrichtung über den Fluidausgang 13 verlässt.

Wenn andererseits der Kugelhahn 29 umgeschaltet wird, indem mittels des Handhebels 59 die Schaltkugel 33 verdreht wird, indem der Handhebel 59 bei Blickrichtung entsprechend Fig. 3 im Uhrzeigersinn geschwenkt wird, verschließt die Schaltkugel 33 die Eintrittsöffnung 57 und gibt den Fluidweg vom Eingangsraum 23 her zur Eingangsöffnung 47 des Hilfsfilters 43 frei. Während das Hauptfilter 3 somit außer Funktion gesetzt ist und ausgewechselt werden kann, ist der Betrieb der betreffenden Anlage über das Hilfsfilter 43 ohne Unterbrechung möglich. Für die Betriebsüberwachung während des normalen Filtrationsbetriebes ist eine Verschmutzungsanzeige 61, die nur in Fig. 1 sichtbar ist, vorgesehen, die den Differenzdruck zwischen Eingangskanal 17 und Ausgangskanal 11 überwacht.

## Patentansprüche

1. Filtervorrichtung für Fluide, mit einem Anschlusskörper (1) mit Fluideingang (19) für Unfiltrat und Fluidausgang (13) für Filtrat, mit einem ersten (43) und einem zweiten Filterelement (3) und mit einer im Anschlusskörper (1) befindlichen Umschalteinrichtung (29), mittels deren eine Fluidverbindung zwischen Fluideingang (19) und Fluidausgang (13) wahlweise über das erste oder über das zweite Filterelement (43; 3) herstellbar ist, wobei das eine der Filterelemente als Hilfsfilter (43) ins Innere des Anschlusskörpers (1) integriert ist, wobei die Umschalteinrichtung einen Kugelhahn (29) aufweist, **dadurch gekennzeichnet, dass** der Hilfsfilter (43) und der Kugelhahn (29) ein ihnen gemeinsames Funktionselement (41) aufweisen, so dass Kugelhahn und Hilfsfilter eine Baueinheit bilden.

2. Filtervorrichtung nach Anspruch 1, **dadurch gekennzeichnet, dass** das zweite Filterelement als Hauptfilter (3) an der Außenseite des Anschlusskörpers (1) abnehmbar angebracht ist.

3. Filtervorrichtung nach einem der vorstehenden Ansprüche, **dadurch gekennzeichnet, dass** ein eine Schaltkugel (33) des Kugelhahns (29) in einem Kugelhahngehäuse (25) in Position haltender Distanzkörper (41) als gemeinsames Funktionselement von Hilfsfilter (43) und Kugelhahn (29) eine Eingangsöffnung (47) aufweist, die einen Fluidweg zwischen diesem und einem inneren Filterhohlraum (45) des Hilfsfilters (43) bildet.

4. Filtervorrichtung nach Anspruch 3, **dadurch gekennzeichnet, dass** das Kugelhahngehäuse (25) über die Schaltkugel (33) hinaus entlang einer Hauptachse (35) verlängert ist, die sich durch den Filterhohlraum (45) des Hilfsfilters (43) hindurch erstreckt, und dass an diesem ein senkrecht zur Hauptachse (35) verlaufender, zum Fluidausgang (13) führender Ausgangskanal (11) vom Kugelhahngehäuse (25) abzweigt.

5. Filtervorrichtung nach Anspruch 4, **dadurch gekennzeichnet, dass** das an der Abzweigstelle des Ausgangskanals (11) im Kugelhahngehäuse (25) angeordnete Hilfsfilter (43) ein den inneren Filterhohlraum (45) vom Ausgangskanal (11) trennendes Filtermedium aufweist.

6. Filtervorrichtung nach einem der Ansprüche 3 bis 5, **dadurch gekennzeichnet, dass** das Kugelhahngehäuse (25) an der der Eingangsöffnung (47) des Hilfsfilters (43) entgegengesetzten Seite eine die Hauptachse (35) umgebende Eintrittsöffnung (57), die mit der Schmutzseite des jeweiligen, am Anschlusskörper (1) angebrachten Hauptfilters (3) in Fluidverbindung ist, sowie eine Zuströmöffnung (27) aufweist, die auf die zur Hauptachse (35) senkrechte Spindelachse (31) der Schaltkugel (33) ausgerichtet und mit dem Fluideingang (19) in Fluidverbindung ist, und dass durch die Schaltkugel (33) die Zuströmöffnung (27) wahlweise mit der zum Hauptfilter (3) führenden Eintrittsöffnung (57) oder mit der zum Hilfsfilter (43) führenden Eingangsöffnung (47) verbindbar ist.

## Claims

1. A filter device for fluids, with a connection member (1) with fluid input (19) for unfiltrate and fluid output (13) for filtrate, with a first (43) and a second filter element (3) and with a switching device (29) located in the connection member (1), by means of which a fluid connection between fluid input (19) and fluid output (13) can be selectively established via the first (43) or via the second filter element (3), wherein one of the filter elements is integrated into the interior of the connection member (1) as an auxiliary filter (43), wherein the switching device has a ball valve (29), **characterised in that** the auxiliary filter (43) and the ball valve (29) have a shared functional element (41), with the result that ball valve and filter form an assembly.

2. The filter device according to claim 1, **characterised in that** the second filter element is removably attached as a main filter (3) to the exterior of the connection member (1).

3. The filter device according to one of the preceding claims, **characterised in that**, as a shared functional element of auxiliary filter (43) and ball valve (29), a spacer member (41) holding in position a switching ball (33) of the ball valve (29) in a ball valve housing (25) has an input opening (47) which forms a fluid path between same and an inner filter cavity (45) of the auxiliary filter (43).

4. The filter device according to claim 3, **characterised in that** the ball valve housing (25) is extended beyond the switching ball (33) along a main axis (35) which extends through the filter cavity (45) of the auxiliary filter (43), and that an output channel (11) travelling perpendicularly to the main axis (35) and leading to the fluid outlet (13), branches off thereon from the ball valve housing (25).

5. The filter device according to claim 4, **characterised in that** the auxiliary filter (43) arranged at the branching point of the output channel (11) in the ball valve housing (25) has a filter medium separating the inner filter cavity (45) from the output channel (11).

6. The filter device according to one of claims 3 to 5, **characterised in that** the ball valve housing (25), on the side opposite the input opening (47) of the auxiliary filter (43) has an entry opening (57) enclosing the main axis (35), which opening is in fluidic connection with the unfiltered side of the respective main filter (3) attached to the connection member (1), as well as an inflow opening (27) which is aligned on the spindle axis (31) of the switching ball (33) perpendicular to the main axis (35) and is in fluidic connection with the fluid input (19), and that the inflow opening (27) can be selectively connected, by the switching ball (33), to the entry opening (57) leading to the main filter (3) or to the input opening (47) leading to the auxiliary filter (43).

## Revendications

1. Dispositif de filtration de fluide, comprenant un corps (1) de raccordement, ayant une entrée (19) de fluide pour du non filtrat et une sortie (13) de fluide pour du filtrat, comprenant un premier (43) et un deuxième élément (3) filtrant et comprenant un dispositif (29) de commutation, qui se trouve dans le corps (1) de raccordement et au moyen duquel une communication fluidique peut être ménagée entre l'entrée (19) de fluide et la sortie (13) de fluide, au choix, en passant par le premier ou par le deuxième élément (43; 3) filtrant, dans lequel l'un des éléments filtrants est intégré, comme filtre (43) auxiliaire, à l'intérieur du corps (1) de raccordement, le dispositif de commutation ayant un robinet (29) à boisseau sphérique, **caractérisé en ce que** le filtre (43) auxiliaire et le robinet (29) à boisseau sphérique ont un élément (41) fonctionnel, qui leur est commun, de sorte que le robinet à boisseau sphérique et le filtre auxiliaire forment une unité de construction.

2. Dispositif de filtration suivant la revendication 1, **caractérisé en ce que** le deuxième élément filtrant est mis, comme filtre (3) principal, avec possibilité d'être retiré, du côté extérieur du corps (1) de raccordement.

3. Dispositif de filtration suivant l'une des revendications précédentes, **caractérisé en ce qu'**un corps (41) d'entretoisement, maintenant en position un boisseau (33) de commutation du robinet (29) à boisseau sphérique dans une enveloppe (25) du robinet à boisseau sphérique, a, comme élément fonctionnel commun du filtre (43) auxiliaire et du robinet (29) à boisseau sphérique, une ouverture (47) d'entrée, qui forme un trajet de fluide entre ce robinet et une cavité (45) intérieure du filtre (43) auxiliaire.

4. Dispositif de filtration suivant la revendication 3, **caractérisé en ce que** l'enveloppe (25) du robinet à boisseau sphérique se prolonge au-delà du boisseau (33) de commutation, le long d'un axe (35), qui passe dans la cavité (45) du filtre (43) auxiliaire et **en ce que**, sur celui-ci, bifurque de l'enveloppe (25) du robinet à boisseau sphérique un canal (11) de sortie, s'étendant perpendiculairement à l'axe (35) principal et menant à la sortie (13) de fluide.

5. Dispositif de filtration suivant la revendication 4, **caractérisé en ce que** le filtre (43) auxiliaire, disposé dans l'enveloppe (25) du robinet à boisseau sphérique au point de bifurcation du canal (11) de sortie, a un milieu filtrant séparant la cavité (45) intérieure du filtre du canal (11) de sortie.

6. Dispositif de filtration suivant l'une des revendications 3 à 5, **caractérisé en ce que** l'enveloppe (25) du robinet à boisseau sphérique a, du côté opposé à l'ouverture (47) d'entrée du filtre (43) auxiliaire, une ouverture (57) d'entrée, qui entoure l'axe (35) principal et qui est en communication fluidique avec le côté sale du filtre (3) principal mis sur le corps (1) de raccordement, ainsi qu'une ouverture (27) d'afflux, qui est dirigée sur l'axe (31) de broche, perpendiculaire à l'axe (35) principal, du robinet (33) de commutation et est en communication fluidique avec l'entrée (19) de fluide, et **en ce que**, par le robinet (33) de commutation, l'ouverture (27) d'afflux peut communiquer, au choix, avec l'ouverture (57) d'entrée menant au filtre (3) principal ou avec l'ouverture (47) d'entrée menant au filtre (43) auxiliaire.
